# EUROPEAN PATENT APPLICATION

(11) **EP 4 007 288 A1**
(43) Date of publication of application: **01.06.2022**
(21) Application number: 20885989.2
(22) Date of filing: 11.09.2020
(51) Int. Cl.: H04N 21/433, H04L 29/06

(54) **METHOD FOR PRE-LOADING CONTENT DATA, AND ELECTRONIC DEVICE AND STORAGE MEDIUM**

(30) Priority: 06.11.2019 CN 201911077933
(71) Applicant: Beijing Dajia Internet Information Technology Co., Ltd., Beijing 100085 (CN)
(72) Inventor: MA, Ming, Beijing 100085 (CN); ZHANG, Pengyu, Beijing 100085 (CN); DENG, Shengjin, Beijing 100085 (CN); LUO, Zhe, Beijing 100085 (CN); GUO, Junjian, Beijing 100085 (CN); ZENG, Fanping, Beijing 100085 (CN); YU, Bing, Beijing 100085 (CN)
(74) Representative: Yang, Shu
(86) International application number: PCT/CN2020/114897
(87) International publication number: WO 2021/088514

(57) **Abstract**

The present disclosure relates to a method and an apparatus for pre-loading content data, and belongs to the technical field of video processing. The method includes: acquiring (S21) a download speed; in response to download speed being less than a first speed threshold and a trigger event occurring, determining (S23) target content data the first speed threshold value is determined on the basis of play data corresponding to each speed interval, and the play data includes at least one of item of the amount of play or a lagging rate; and loading (S24) the target content data.

## Description

This application claims priority to Chinese Patent Application No. 201911077933.X, filed on November 6, 2019 and entitled "METHOD AND APPARATUS FOR PRELOADING CONTENT DATA," the disclosure of which is herein incorporated by reference in its entirety.

### TECHNICAL FIELD

The present disclosure relates to the field of video processing technologies, and in particular, relates to a method for pre-loading content data, and an electronic device, and a storage medium.

### BACKGROUND

With the rapid development of internet technologies, a user can obtain massive content data over the Internet, such as a video, an audio, a text, a web page, and the like, especially a short video, which is very popular nowadays. In an application that provides content data, a content list is usually provided, in which a large number of content options are disposed. The user may select and click an interested content option, and the terminal will download the corresponding content data. In this way, the user can browse or listen to the content data.

In order to provide the user with smooth browsing or listening experience, the application that provides content data generally possesses a preloading function. Prior to the user clicking the content data, the preloading function may pre-determine some of the content data that is most likely to be clicked by the user, and download and store these content data in advance. In this way, when the user clicks to select these content data, the terminal does not need to download the content data, and can directly obtain the locally stored content data for display or play.

The current preloading function preloads content data in all cases, which takes up a lot of transmission resources.

### SUMMARY

The present disclosure provides a method for preloading content data, an electronic device, and a storage medium. The technical solutions of the present disclosure are as follows.

According to one aspect of the present disclosure, a method for preloading content data is provided. The method includes:
acquiring a download speed;
determining target content data in response to the download speed being less than a first speed threshold and a trigger event occurring, wherein the trigger event is configured to trigger pre-loading of the target content data, and the first speed threshold is determined based on corresponding play data in different speed ranges, the play data including at least one of a play amount or a lag rate; and
loading the target content data.
In some embodiments, the method further includes:
stopping loading the target content data in response to the download speed being greater than the first speed threshold.
In some embodiments, prior to acquiring the download speed, the method further includes:
receiving the first speed threshold from a server, wherein the first speed threshold is determined based on corresponding play data of a plurality of terminals in different speed ranges, the plurality of terminals including terminals with preloading function enabled and terminals with preloading function disabled.

In some embodiments, the method further includes:
determining the first speed threshold based on a first curve and a second curve; and
determining a difference value threshold based on a difference value between play data on the first curve corresponding to the first speed threshold and play data on the second curve corresponding to the first speed threshold,
wherein the first curve is configured to indicate corresponding play data of terminals with preloading function enabled in different speed ranges, and the second curve is configured to indicate corresponding play data of terminals with preloading function disabled the different speed ranges.

In some embodiments, after loading the target content data, the method further includes:
receiving a second speed threshold from the server; and
updating the first speed threshold based on the second speed threshold.

In some embodiments, determining the target content data includes:
determining a content list including a plurality of pieces of content data;
determining content data which has not been preloaded in the content list; and
determining the target content data based on the content data which has not been preloaded.

In some embodiments, determining the target content data includes:
receiving indication information from a server, wherein the indication information is configured to indicate the target content data; and
determining the target content data based on the indication information.

According to another aspect of the present disclosure, an apparatus for preloading content data is provided. The apparatus includes:
an acquiring unit configured to acquire a download speed;
a determining unit configured to determine target content data in response to the download speed being less than a first speed threshold and a trigger event occurring, wherein the trigger event is configured to trigger pre-loading of the target content data, and the first speed threshold is determined based on corresponding play data in different speed ranges, the play data including at least one of a play amount or a lag rate; and
a loading unit configured to load the target content data.

In some embodiments, the loading unit is further configured to: stop loading the target content data in response to the download speed being greater than the first speed threshold.

In some embodiments, the acquiring unit is further configured to receive the first speed threshold from a server, wherein the first speed threshold is determined based on corresponding play data of a plurality of terminals in different speed ranges, the plurality of terminals including terminals with preloading function enabled and terminals with preloading function disabled.

In some embodiments, the determining unit is configured to: determine the first speed threshold based on a first curve and a second curve; and determine a difference value threshold based on a difference value between play data on the first curve corresponding to the first speed threshold and play data on the second curve corresponding to the first speed threshold, wherein the first curve is configured to indicate corresponding play data of terminals with preloading function enabled in different speed ranges, and the second curve is configured to indicate corresponding play data of terminals with preloading function disabled in the different speed ranges.

In some embodiments, the apparatus further includes an updating unit configured to: receive a second speed threshold from the server; and
update the first speed threshold based on the second speed threshold.

In some embodiments, the determining unit is configured to:
determine a content list including a plurality of pieces of content data;
determine content data which is not preloaded in the content list; and
determine the target content data based on the content data which is not preloaded.

In some embodiments, the determining unit is configured to:
receive indication information from a server, wherein the indication information is configured to indicate the target content data; and
determine the target content data based on the indication information.

According to another aspect of the present disclosure, an electronic device is provided. The electronic device includes:
a processor; and a memory for storing at least one instruction, wherein the at least one instruction is configured to be loaded and executed the processor to perform a method for preloading content data, including:
acquiring a download speed;
determining target content data in response to the download speed being less than a first speed threshold, and a trigger event occurring, wherein the trigger event is configured to trigger pre-loading of the target content data, and the first speed threshold is determined based on corresponding play data in different speed ranges, the play data including at least one of a play amount or a lag rate; and loading the target content data.

In some embodiments, the processor is configured to perform:
stopping loading the target content data in response to the download speed being greater than the first speed threshold.

In some embodiments, the processor is further configured to perform:
receiving the first speed threshold from a server, wherein the first speed threshold is determined based on corresponding play data of a plurality of terminals in different speed ranges, the plurality of terminals including terminals with preloading function enabled and terminals with preloading function disenabled.

In some embodiments, the processor is further configured to perform:
determining the first speed threshold based on a first curve and a second curve; and
determining a difference value threshold based on a difference value between play data on the first curve corresponding to the first speed threshold and play data on the second curve corresponding to the first speed threshold,
wherein the first curve is configured to indicate corresponding play data of terminals with preloading function enabled in different speed ranges, and the second curve is configured to indicate corresponding play data of terminals with preloading function disabled in the different speed ranges.

In some embodiments, the processor is further configured to perform:
receiving a second speed threshold from the server; and
updating the first speed threshold based on the second speed threshold.

In some embodiments, the processor is further configured to perform:
determining a content list including a plurality of pieces of content data;
determining content data which is not preloaded in the content list; and
determining the target content data based on the content data which is not preloaded.

In some embodiments, the processor is further configured to perform:
receiving indication information from a server, wherein the indication information is configured to indicate the target content data; and
determining the target content data based on the indication information.

According to yet another aspect of the present disclosure, a storage medium is provided, including:
the storage medium storing at least one instruction, wherein the at least one instruction is configured to be loaded and executed by a processor to perform:
acquiring a download speed;
determining target content data in response to the download speed being less than a first speed threshold and a trigger event occurring, wherein the trigger event is configured to trigger pre-loading of the target content data, and the first speed threshold is determined based on corresponding play data in different speed ranges, the play data including at least one of a play amount or a lag rate; and
loading the target content data.

In some embodiments, in the case that the instructions stored in the storage medium are executed by the processor of an electronic device, the electronic device is further enabled to perform:
stopping loading the target content data in response to the download speed being greater than the first speed threshold

In some embodiments, in the case that the instructions stored in the storage medium are executed by the processor of the electronic device, the electronic device is further enabled to perform:
receiving the first speed threshold from a server, wherein the first speed threshold is determined based on corresponding play data of a plurality of terminals in different speed ranges, the plurality of terminals including terminals with preloading function enabled and terminals with preloading function disabled.

In some embodiments, in the case that the instructions stored in the storage medium are executed by the processor of the electronic device, the electronic device is further enabled to perform:
determining the first speed threshold based on a first curve and a second curve; and
determining a difference value threshold based on a difference value between play data on the first curve corresponding to the first speed threshold and play data on the second curve corresponding to the first speed threshold,
wherein the first curve is configured to indicate corresponding play data of terminals with preloading function enabled in different speed ranges, and the second curve is configured to indicate corresponding play data of terminals with preloading function disabled in the different speed ranges.

In some embodiments, in the case that the instructions stored in the storage medium are executed by the processor of the electronic device, the electronic device is further enabled to perform:
receiving a second speed threshold from the server; and
updating the first speed threshold based on the second speed threshold.

In some embodiments, in the case that the instructions stored in the storage medium are executed by the processor of the electronic device, the electronic device is further enabled to perform:
determining a content list including a plurality of pieces of content data;
determining content data which has not been preloaded in the content list; and
determining the target content data based on the content data which has not been preloaded.

In some embodiments, in the case that the instructions stored in the storage medium are executed by the processor of the electronic device, the electronic device is further enabled to perform the following steps:
receiving indication information from a server, wherein the indication information is configured to indicate the target content data; and
determining the target content data based on the indication information.

According to yet another aspect of the present disclosure, a computer program product is provided. The computer program product stores at least one instruction, and the at least one instruction are loaded and executed by a processor to perform the following steps:
acquiring a download speed;
determining target content data in response to the download speed being less than a first speed threshold and a trigger event occurring, wherein the trigger event configured to trigger pre-loading of the target content data, and the first speed threshold is determined based on corresponding play data in different speed ranges, the play data including at least one of a play amount or a lag rate; and
loading the target content data.

In some embodiments, in the case that the instructions stored in a storage medium are executed by the processor of an electronic device, the electronic device is further enabled to perform:
stopping loading the target content data in response to the download speed being greater than the first speed threshold.

In some embodiments, in the case that the instructions stored in the storage medium are executed by the processor of the electronic device, the electronic device is further enabled to perform:
receiving the first speed threshold from a server, wherein the first speed threshold is determined based on corresponding play data of a plurality of terminals in different speed ranges, the plurality of terminals including terminals with preloading function enabled and terminals with preloading function disabled.

In some embodiments, the first speed threshold is determined based on a first curve and a second curve. A difference value threshold is a difference value between play data on the first curve corresponding to the first speed threshold and play data on the second curve corresponding to the first speed threshold. The first curve is configured to indicate corresponding play data of terminals with preloading function enabled in different speed ranges, and the second curve is configured to indicate corresponding play data of terminals with preloading function disabled in the different speed ranges.

In some embodiments, in the case that the instructions stored in the storage medium are executed by the processor of the electronic device, the electronic device is further enabled to perform:
receiving a second speed threshold from a server; and
updating the first speed threshold based on the second speed threshold.

In some embodiments, in the case that the instructions stored in the storage medium are executed by the processor of the electronic device, the electronic device is further enabled to perform:
determining a content list including a plurality of pieces of content data;
determining content data which has not been preloaded in the content list; and
determining the target content data based on the content data which has not been preloaded.

In some embodiments, in the case that the instructions stored in the storage medium are executed by the processor of the electronic device, the electronic device is further enabled to perform:
receiving indication information from a server, wherein the indication information is configured to indicate the target content data; and
determining the target content data based on the indication information.

The technical solutions of the embodiments of the present disclosure may at least bring the following beneficial effects.

In the embodiments of the present disclosure, by preloading content data in the case that the download speed is low, the data volume of the preloaded content data is greatly reduced, thereby reducing the occupation of transmission resources.

It should be understood that the above general descriptions and the following detailed descriptions are only exemplary and illustrative, and cannot limit the present disclosure.

### BRIEF DESCRIPTION OF THE DRAWINGS

The accompanying drawings herein are incorporated into the description and constitute a part of the description, to illustrate embodiments conforming to the present disclosure. The accompanying drawings are used to explain the principle of the present disclosure in combination with the description, and do not constitute an improper limitation on the present disclosure.
FIG. 1 is schematic diagram of an implementation environment of a method for preloading content data according to an embodiment of the present disclosure;
FIG. 2 is a flow chart showing a method for preloading content data according to an embodiment of the present disclosure;
FIG. 3 is a schematic diagram showing a change relation between a download speed and a play amount according to an embodiment of the present disclosure;
FIG. 4 is a schematic diagram showing a change relation between a download speed and a lag rate according to an embodiment of the present disclosure;
FIG. 5 is a schematic diagram showing a change relation between a download speed and play data according to an exemplary embodiment;
FIG. 6 is a schematic diagram showing a change relation between a download speed and play data according to an embodiment of the present disclosure;
FIG. 7 is a schematic structural diagram of an apparatus for preloading content data according to an embodiment of the present disclosure; and
FIG. 8 is a schematic structural diagram of a terminal according to an embodiment of the present disclosure.

### DETAILED DESCRIPTION

For better understanding of the technical solutions of the present disclosure by those skilled in the art, the technical solutions of the embodiments of the present disclosure are described clearly and completely hereinafter in combination with the accompanying drawings.

It should be noted that the terms "first", "second", and the like in the description, claims and the accompanying drawings of the present disclosure are used to distinguish similar objects, are not intended to indicate specific sequence or order. It should be understood that data used in this way are interchangeable in an appropriate case, such that the embodiments of the present disclosure described herein can be implemented in a sequence other than those illustrated or described herein. The implementations set forth in the following exemplary embodiments do not represent all implementations consistent with the present disclosure. Instead, they are merely examples of apparatuses and methods consistent with aspects related to the present disclosure as recited in the appended claims.

The user information involved in the present disclosure includes information authorized by the user or fully authorized by all parties.

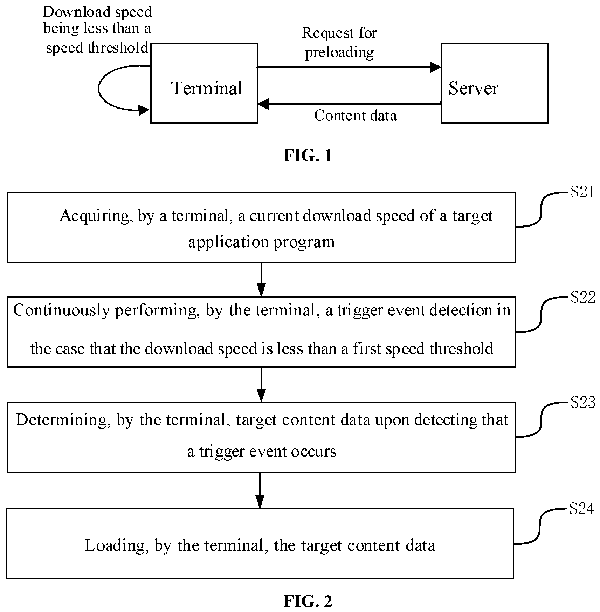

An example of the implementation environments for implementing a method for preloading content data according to an embodiment of the present disclosure is shown in FIG. 1. For example, the methods for preloading content data according to the embodiments of the present disclosure may realize a network adaptive preloading function.

The network adaptive preloading means that a terminal can determine whether to enable or disable preloading function based on the download speed. For example, where the download speed is slow, the terminal enables the preloading function; and where the download speed is fast, the terminal disables the preloading function. In this way, the action of performing the preloading action of the terminal can adapt to dynamic changes of the Internet.

The methods provided in the embodiments may, for example, be implemented by a terminal and a server collectively. The terminal may, for example, be a mobile terminal or a fixed terminal, and may, for example, be a cell phone, a tablet, a laptop, a desktop computer, etc. The terminal possesses a communication capability, and further possesses a data processing and storage capability. The terminal is installed with an application, and the application may, for example, be a short video application. The server may, for example, be a backend server for the application. The server possesses a communication capability, and further possesses a data processing and storage capability.

The content data in the embodiments of the present disclosure may, for example, be a text, an audio, a video, a web page, etc. In terms of a short video application, the content data may, for example, be a short video. In the embodiments of the present disclosure, the technical solutions are illustrated in detail by taking the short video application as an example of the application and taking the content data as an example of the short video. In other cases, the situation is similar and thus is not repeated in the embodiments of the present disclosure.

The application may include a plurality of pages. When the terminal displays the application, a plurality of tabs may be displayed at a bottom of an interface, and each tab corresponds to one page. The page may include a video recommending page, a page of nearby short videos (a page in which the videos are published by users who are close to the current user, such as the users in the same city), a follow page, and the like. The user can enter a video playing page upon clicking the short video on a page. The video playing page is disposed with functional controls, such as a like, a comment and a follow. The terminal displays the short video selected by the user on the video playing page. In addition, the terminal may optionally display relevant information of the user who published the short video, such as an account identification and the like, and optionally display text information edited when the user published the short video for expressing the mood or theme. In the video playing page, the user can access other pages by sliding to the left or to the right. Where the page displayed on the terminal is a short video playing page, when a user triggers a left-sliding operation, the terminal may switch the short video playing page to a previous page in response to the left-sliding operation, and when the user triggers a right-sliding operation, the terminal may switch the short video playing page to a personal page in response to the right-sliding operation.

The user may trigger an operation of starting the application when he/she wants to view a short video. The terminal displays a page in response to the starting operation. The page may, for example, be a video page, a page of nearby short videos or a follow page, and each page has a video list. The video list includes a plurality of short video options, and each short video option is a small window. The terminal displays information of different short videos in different short video options. The information of the short video includes various attributes, such as an avatar or a nickname of the user who uploads the short video, and the cover image of the short video. Optionally, the terminal may further display the attention level of the video in the short video option. When the user clicks a short video option in the video list, the terminal may be triggered to download the corresponding short video from the server and enter the video playing page to play the short video. A short video preloading mechanism is provided in the short video application. The preloading function means that the terminal downloads and stores the short video in advance prior to the user clicking the short video option. In this way, the terminal does not need to download the short video at the time when the user clicks the short video option, but can directly acquire and display the short video that has been locally stored. In a case that the download speed of the terminal is not very good (for example, less than a first speed threshold), through preloading the short video, a wait or lag in the process of loading the video can be effectively reduced.

After the user enters any of the video page, the page of nearby short videos, or the follow page, the terminal may perform the video preloading. In the embodiments of the present disclosure, the video preloading function is controlled to be enabled or disabled based on the download speed of the terminal. For example, the terminal may enable the video preloading function where the download speed is less than the speed threshold and disable the video preloading function where the download speed is greater than the speed threshold, thereby achieving the function of controlling the enabling or disabling of the preloading.

FIG. 2 is a flow chart showing a method for preloading content data according to an exemplary embodiment of the present disclosure. The method includes following steps.

In S21, the terminal acquires a current download speed of a target application.

The current download speed of the target application is an example illustrating the download speed. For example, in the case that a user is browsing content through a short video application, the terminal may detect the data volume downloaded in unit time. Then, the terminal may derive the download speed by calculating the data volume. For example, in the case that the user watches a short video on a cell phone, where 300 megabytes of the short video are sent within one second over the cell phone, the download speed of the cell phone is 300 megabytes/second.

In some other embodiments, the download speed is determined based on the total data volume sent by the terminal. For example, the terminal may detect the total data volume sent by the terminal in unit time, and then determine the download speed based on the total data volume.

In some embodiments, the terminal may further send the acquired download speed to a server. For example, the terminal may record the download speed in a log and upload the log to the server. The server end acquires the log uploaded by the terminal and gets the download speed of the terminal from the log. The server determines the speed threshold by analyzing the download speed uploaded by the terminal and other parameters.

In S22, the terminal continuously performs a trigger event detection in the case that the download speed is less than a first speed threshold.

The speed threshold is also called a data download speed threshold. The fashion of acquiring the speed threshold is not limited in thus embodiment. In some embodiments, the terminal pre-stores the speed threshold and implements the embodiment based on the pre-stored speed threshold. In some other embodiments, the terminal receives the speed threshold from the server and implements the embodiment based on the received speed threshold. In some other embodiments, the terminal calculates the speed threshold and implements the embodiment based on the calculated speed threshold.

In addition, some embodiments of the present disclosure may involve the update of the speed threshold. Thus, for the purpose of describing the speeds in a distinguishable manner, the speed threshold prior to updating is referred to as the first speed threshold, and the speed threshold after updating is referred to as a second speed threshold.

The first speed threshold is determined based on corresponding play data in different speed ranges. The speed ranges are also referred to as internet speed ranges. In some embodiments, the first speed threshold is determined based on the play data of terminals with preloading function enabled in different speed ranges and on the play data of terminals with preloading function disabled in different speed ranges.

The play data is also referred to as actual play data, and may include at least one of a play amount or a lag rate. The play amount is, for example, the total play amount of the content. The lag rate is, for example, the lag rate in playing the content.

The content data is downloaded, for example, via the network. The content data may, for example, be data for viewing or listening to, such as multimedia data. The content data may, for example, be text data, audio data, video data or webpage data, etc.

In some embodiments, the terminal detects the download speed based on a preset cycle length after starting the short video application. The terminal may compare the current download speed with the first speed threshold after each time the download speed is detected. Where the current download speed is less than the first speed threshold, it means that the current network is not very smooth, and a lag may occur if the terminal does not download the short video until the user selects and clicks the short video. In this case, the terminal determines that the preloading function is to be enabled.

The trigger event is also referred to as a trigger event for preloading the content data. For example, the technician may preset a trigger event which may be, for example, set based on requirements. For example, the trigger event may be an action of opening a page or playing a video, etc.

The timing for performing the trigger event detection is not limited in embodiments of the disclosure. In some embodiments, the terminal continuously performs trigger event detection after the preloading function is enabled. In some embodiments, the terminal performs trigger event detection after the short video application is started. In some other embodiments, the terminal performs trigger event detection after receiving a command from the server.

In some embodiments, in the case that the download speed is greater than the first speed threshold, the terminal stops the trigger event detection and stops the preloading of the content data. Specifically, where the download speed is greater than the first download speed threshold, it means that the current network is relatively smooth, and a lag may be less likely to occur if the terminal does not download the short video until the user selects and clicks the short video. In this case, the terminal determines not to enable the preloading function. In some other embodiments, in the case that the download speed is less than the first speed threshold, the terminal stops the preloading of the content data and still performs the trigger event detection.

In S23, upon detecting that a trigger event occurs, the terminal determines target content data.

Through S22 and S23 above, the terminal determines the target content data in response to the download speed being less than the first speed threshold and the trigger event occurring.

The target content data is, for example, content data that needs to be preloaded. In an example, the target content data is a target short video. The target short video may be a short video that needs to be preloaded.

Taking the target content data being a short video as an example, in some embodiments, the terminal may continuously perform the trigger event detection after the preloading function is enabled, and may determine, upon detecting that a trigger event occurs, the target short video (i.e., the target content data) based on the trigger event. In this example, the target content data may, for example, be one or more videos in the current video list.

The number of pieces of the target content data is not limited in embodiment. In some embodiments of the disclosure, the number of pieces of the target content data (e.g., the number of short videos that need to be loaded) is preset by a technician.

In some embodiments, the target content data is determined based on at least one of attribute information or historical operation information of a user. The attribute information may include, for example, gender, age, city, occupation, etc. The historical operation information may include, for example, information on history of browsing, liking, following, sharing, and other operations of the user. For example, in a case where the target content data is a short video that needs to be preloaded, after a video display page of the short video application, such as, a video recommending page, a page of nearby short videos, a follow page, etc., is entered under the operation of a user, the terminal may send a request for video list to the server. After receiving the request for video list, the server determines at least one of the attribute information or the historical operation information based on the account currently logged-in by the terminal. Furthermore, based on the at least one of the attribute information or the historical operation information, the server selects, from a short video library, short video(s) matching the attribute information or the historical operation information for the user. For example, if a user often browses fitness-related short videos, the server may select fitness-related short videos at a higher percentage when selecting short videos for the user. In another case, if a user lives in Beijing and is around 35-40 years old, the server may select short videos related to places that are suitable for parent-child activities in Beijing when selecting short videos for the user. Here, the browsing of fitness-related short videos is an example embodied the historical operation information, and living in Beijing and being around 35-40 years old is an example embodied the attribute information.

In some embodiments, the terminal is notified of the target content data (e.g., the short video that needs to be preloaded) by the server in advance. The terminal determines the short video that needs to be preloaded based on the notification message from the server after detecting that the trigger event occurs. For example, when loading the content list, the terminal may load content options in a unit of content group. For example, one content group may include a preset number of content options (e.g., 20 content options). Accordingly, in the process of performing S23, the server may send indication information to the terminal; the terminal receives the indication information from the server; and when the terminal is to load the content options of any content group in the content list, the terminal determines the target content data based on the indication information sent by the server.

Here, the indication information is configured to indicate the target content data in the content group. The content group includes a plurality of pieces of content data, and each piece of the content data in the content group corresponds to a content option.

The content list includes at least one piece of content data. In an example, the content list is a video list, and includes a plurality of videos. In an example, the content list is a short video list, and includes one or more short videos. In another example, the content list is an image list, and includes at least one image. In another example, the content list is a graphic information list, and includes at least one piece of graphic information. In another example, the content list is a product information list, and includes at least one piece of product information.

In some embodiments, the number of pieces of content data in the content group is a first preset number. For example, the server may select a first preset number of short videos each time the server selects short videos for the user. This first preset number is, for example, preset by the technician and recorded in the server. The first preset number is set, for example, according to the smoothness of the display performed by the terminal and the occupation of the transmission resources. By setting the first preset number to a reasonable value, rather than an excessively large first preset number, the server can be prevented from sending too much data to the terminal at one time, such that the waste of transmission resources can be avoided; in addition, by setting the first preset number to a reasonable value, rather than an excessively small first preset number, the server can also be prevented from sending too few short video options to the terminal at one time, so as to avoid influencing the user experience due to the wait for data transmission caused by frequent requests for new short video options during the process that the user quickly slides the video list. In some embodiments, the technician determines a reasonable first preset number based on experiments or data analysis. For example, the first preset number may be 20. When the user performs sliding operations on the terminal, each time the user slides over the first preset number of short videos, the terminal may send a request for loading a next content group to the server.

In some embodiments, the content option is loaded based on relevant information. For example, in a case where the content option is a short video option, the server, after selecting the first preset number of short videos for the user, acquires the relevant information of the short videos. The relevant information is configured for the terminal to load corresponding short video options in the video list. The relevant information may include, for example, a cover image of the short video, an avatar of an account publishing the short video, the number of likes of the short video, and/or the download link of the short video, etc. The terminal displays the video list after receiving the relevant information and indication information of the short videos in the content group, and the video list displays the short video options corresponding to each short video in the content group. The terminal displays the cover image, the avatar of the account, the number of likes, etc. in the short video options. In addition, the terminal stores the indication information and determines the short video to be preloaded based on the indication information.

In some embodiments, in a case where the content data is a short video, the server, after selecting the first preset number of short videos for the user, further selects, among the first preset number of short videos, a certain number of target short videos as the target content data. The number of the selected short videos may, for example, be a second preset number. In some embodiments, the server further selects the target short video based on the attribute information or the historical operation information. For example, when selecting the first preset number of short videos, the server may score the short videos in the short video library based on at least one of the attribute information or the historical operation information, and select 20 (the first preset number) short videos with the highest scores, and then select 3 (the second preset number) short videos with the highest scores among the selected 20 short videos for preloading. Such a selection fashion ensures that the selected short videos that need to be preloaded are the ones that users are most likely to click to watch, which helps to increase the click-through rate.

In some embodiments, the second preset number is set based on the smoothness of the display performed by the terminal and the occupation of the transmission resources, such that the second preset number is not excessively large to occupy too much transmission resources and is not excessively small to affect the smoothness of the terminal in loading the short videos.

In some embodiments, the first preset number of short videos may be referred to as a content group, or a short video group. The server sends relevant information of the short videos in the current content group to the terminal, and simultaneously sends the indication information to the terminal. The indication information is configured to indicate the target short video in the content group, and may, for example, be the identification information of the short videos that need to be loaded. In some other embodiments, the server does not determine the short videos that need to be preloaded, and when the server sends indication information, the sent indication information may, for example, be score corresponding to each of the short videos in the current content group, and the terminal determines the second preset amount of short videos with the highest score as the short videos to be preloaded (the target content data) based on the score corresponding to each short video.

In S24, the terminal loads the target content data.

In some embodiments, in a case where the target content data is a short video, the terminal, after determining the target short video, acquires a download link of the target short video among the relevant information of the short videos sent by the server, downloads the target short video based on the download link, and stores the target short video locally. When the user clicks the corresponding short video option, the terminal acquires the target short video locally stored and thereby displays the target short video.

In some embodiments, optionally, to enable the preloading function, the terminal may determine whether the condition for enabling the preloading function is met at the current moment and whether there is content data that needs to be preloaded, and then perform the downloading action. Accordingly, the terminal performs the following actions: in the case that the download speed is less than a pre-stored speed threshold, the terminal determines the content group to which the currently displayed content option in the content list belongs; and if the content data that needs to be preloaded in the content group has not been downloaded to a local position, the terminal downloads the content data that needs to be preloaded in the content group. In other words, the terminal determines the content list that includes a plurality of pieces of content data; the terminal determines the content data which has not been preloaded in the content list; and the terminal determines the target content data based on the content data which has not been preloaded.

Here, the content group includes a plurality of pieces of content data, and each piece of the content data in the content group corresponds to one content option.

In some embodiments, the terminal may compare the download speed and the speed threshold periodically, and in this case, the following situations may occur. At a time point in a certain cycle, the download speed is greater than the speed threshold, thus the terminal disables the preloading. Then, before the next cycle has reached, a user may perform an operation on the short video application and thus the loading of the video list is triggered. At this time, because the preloading function is still disabled, even if the server sends the relevant information of the short videos in the content group and simultaneously sends the indication information to the terminal, the terminal would not determine and download the short videos that need to be preloaded based on the indication information. Subsequently, in a next cycle, the network state may become worse and the download speed is less than the speed threshold, at this time, the preloading function is enabled, and then the terminal determines the content group to which the short video options displayed in the current video list belong, further acquires the indication information corresponding to the content group previously sent by the server, determines the short videos that need to be preloaded based on the indication information, and further downloads the corresponding short videos. In this way, the terminal completes the preloading of the short videos.

Embodiments of the present disclosure provide a method for determining a speed threshold. In some embodiments, the speed threshold is determined based on statistical data. In some embodiments, the speed threshold is sent by a sever to the terminal for storage. The processes for determining the speed threshold are described in detail hereinafter.

In some embodiments, a first speed threshold is determined based on a first curve and a second curve, and a difference value threshold is determined based on a difference value between play data on the first curve corresponding to the first speed threshold and play data on the second curve corresponding to the first speed threshold. Here, the first curve is configured to indicate corresponding play data of a terminal with preloading function enabled at different speed ranges, and the second curve is configured to indicate play data of a terminal with preloading function disabled at different speed ranges.

Within a preset duration, the server acquires the corresponding play data of a plurality of terminals with preloading function enabled in different speed ranges, and the corresponding play data of a plurality of terminals with preloading function disabled in different speed ranges. Here, the play data includes at least one of a play amount or a lag rate. The server determines the first curve based on the corresponding play data of terminals with preloading function enabled in different speed ranges, and the first curve includes the download speed and each type of play data. The server determines the second curve of the download speed and each type of play data based on the corresponding play data of terminals with preloading function disabled in different speed ranges. For each type of play data, the server compares, from low download speed to high download speed, the difference values in play data corresponding to the respective download speeds with the preset difference value threshold based on the corresponding first curve and second curve. When the server determines that the difference value in play data corresponding to a target download speed is equal to the difference value threshold, the target download speed and the play data are recorded correspondingly. Here, the difference value in play data is a difference value between the play data of the plurality of terminals with preloading function enabled and the play data of the plurality of terminals with preloading function disabled. The server determines the speed threshold based on the target download speed corresponding to each type of play data.

The first curve and the second curve are two different curves. The first curve is configured to indicate the corresponding play data of a terminal with preloading function enabled in different speed ranges, and is also referred to as a first change curve. The second curve is configured to indicate the corresponding play data of a terminal with preloading function disabled in different speed ranges, and is also referred to as a second change curve. In other words, the first speed threshold is determined based on the first curve and the second curve, and the difference value threshold is the difference value between the play data on the first curve and the play data on the second curve at the first speed threshold.

In some embodiments, the server selects two groups of terminals among all terminals, and the numbers of terminals in the two groups are equal. The server notifies the terminals in the first group to continuously enable preloading and notifies the terminals in the second group to continuously disable preloading. The terminals in the two groups report the download speeds to the server intermittently or in real time or periodically, and the server calculates an average value of the download speeds of each terminal and records the average value as the download speed of each terminal.

In some embodiments, the server further divides the download speeds into a plurality of speed ranges of equal size. For each speed range, the server makes statistics on play data of the terminals (temporarily referred to as a terminal set A here, i.e., the terminals with preloading function enabled) belonging to the speed range in the first group, and makes statistics on play data of the terminals (temporarily referred to as a terminal set B here, i.e., the terminals with preloading function disabled) belonging to the speed range in the second group.

The play amount is, for example, the total times that the plurality of terminals play the content data. For example, in a case where the content data is short video, the play amount is the total times that the plurality of terminals play the short video. For example, the play amount is the total times that all terminals in the terminal set A or the terminal set B play the short video within a preset time duration. The total times that all terminals in the terminal set A play the short video within the preset time duration is an example of the play amount of the terminals with preloading function enabled. The total times that all terminals in the terminal set B play the short video within the preset time duration is an example of the play amount of the terminals with preloading function disabled.

The lag rate is also referred to as the lag rate of playing the content. The lag rate is determined, for example, based on the total times of lags and the play amount. For example, the server makes statistics on the time duration from the time point when the user clicks the short video option to the time point when the terminal begins to play the short video for each terminal in the terminal set A or the terminal set B. Where the time duration is longer than a preset threshold, a lag is recorded by the server; and the server counts the total times of lags occurring in all the terminals in the terminal set A or the terminal set B within the preset duration. Then, the total times of lags is divided by the play amount to acquire a ratio referred to as the lag rate. A ratio of the total times of lags in the terminal set A to the play amount of the terminal set A is an example of the lag rate of the terminals with preloading function enabled. A ratio of the total times of lags in the terminal set B to the play amount of the terminal set B is an example of the lag rate of the terminals with preloading function disabled.

The following is a description of a case where both the play amount and the lag rate are counted. The server may acquire the first curve and the second curve based on the play amount and the lag rate after determining the play amount and the lag rate in each speed range. In some embodiments, the first curve indicates the relationship between the play amounts and the download speeds of the terminals in the first group, and the second curve indicates the relationship between the play amounts and the download speeds of the terminals in the second group.

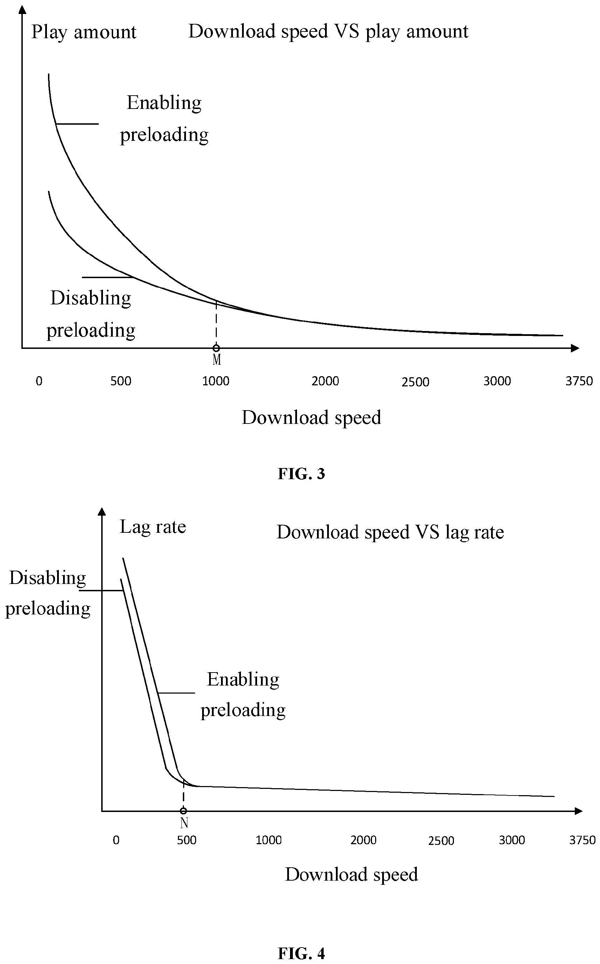

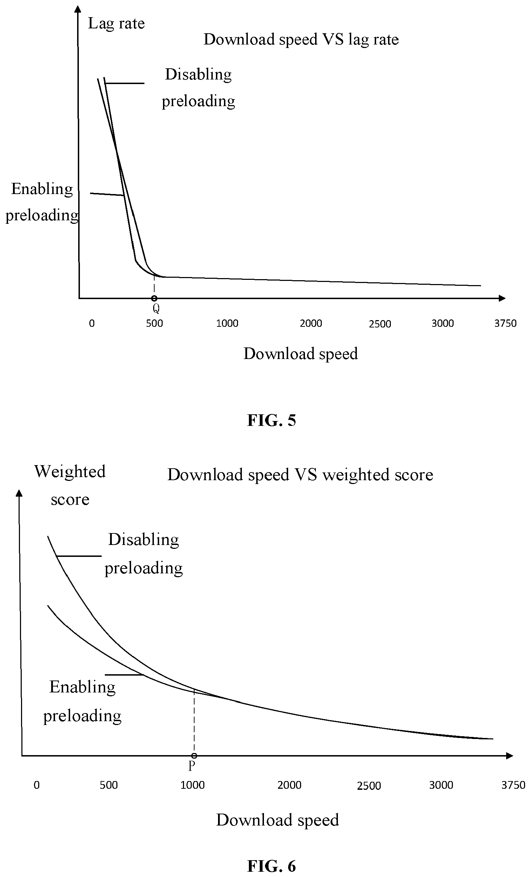

For example, as shown in FIG. 3, the two curves shown in FIG. 3 are examples of the first curve and the second curve. The vertical coordinates of the first and second curves shown in FIG. 3 represent the play amount, and the horizontal coordinates of the first and second curves shown in FIG. 3 represent the download speed. In some other embodiments, the first curve represents the relationship between the lag rates and the download speeds of the terminals in the first group, and the second curve represents the relationship between the lag rates and the download speeds of the terminals of in second group. For example, as shown in FIG. 4, the two curves shown in FIG. 4 are examples of the first curve and the second curve. The vertical coordinates of the first curve and the second curve shown in FIG. 4 represent the lag rate, and the horizontal coordinates in the first and second curves shown in FIG. 4 represent the download speed. Further, the server determines, based on the curve shown in FIG. 3 and from low download speed to high download speed, the difference value between play amounts of the terminals in the first group and the terminals in the second group at a same download speed, and finds out the current download speed when the difference value in play amounts is less than a threshold, i.e., the download speed at point M in FIG. 3. The server may determine, based on the curve shown in FIG. 4 and from low download speed to high download speed, the difference value between lag rates of the terminals in the first group and the terminals in the second group at a same download speed, and finds out the download speed where the difference value in lag rate is less than a difference value threshold, i.e., the download speed at point N in FIG. 4. Then, the server determines the greater one of the two download speeds determined above as the speed threshold. As shown in FIG. 5, as the download speed increases, the difference value in play data decreases to the first difference value threshold, then decreases to 0 and then gradually increases beyond the second difference value threshold, and later decreases to the first difference value threshold for a second time and then decreases to 0 and then stays close to 0. In this case, the server may select the download speed where the difference value in play data decreases to the first difference threshold for the second time as the speed threshold.

As can be seen in FIG. 3, the play amount and the download speed are negatively correlated. When the download speed is within the speed range (0, 1000), the play amount of the terminal with preloading function enabled is greater than that of the terminal with preloading function disabled. When the download speed is within the speed range (1000, 3750), the play amount of the terminal with preloading function enabled is approximately equal to the play amount of the terminal with preloading function disabled. Therefore, by selecting a speed threshold in the speed range (0, 1000) and determining whether to enable preloading function based on the speed threshold, it helps to increase the play amount such that a greater gain can be obtained.

In some embodiments, the server acquires, within a preset time duration, the corresponding play data of the terminals in different speed ranges among the plurality of terminals with preloading function enabled, and the corresponding play data corresponding to the terminals in different speed ranges among the plurality of terminals with preloading function disabled. Here, the play data is determined based on at least one of the total play amount of the content or the lag rate of playing the content. The server determines the first curve of the download speed and play data based on the corresponding play data of the terminals with preloading function enabled in different speed ranges, and determines the second curve of the download speed and play data based on the corresponding play data of the terminals with preloading function disabled in different speed ranges. Based on the first curve and the second curve, the difference values in play data corresponding to the respective download speeds are compared with the preset difference value threshold and from low download speed to high download speed, and when it is determined that the difference value in play data corresponding to a target download speed is equal to the difference value threshold, the target download speed is determined as the speed threshold.

In some embodiments, the server selects two groups of terminals among all terminals, and the number of terminals in the two groups are equal. Optionally, the server notifies the terminals in the first group to continuously enable preloading and notifies the terminals in the second group to continuously disable preloading. The terminals in the two groups report the download speeds to the server intermittently or in real time or periodically, and the server calculates an average value of the download speeds of each terminal and records the average value as the download speed of each terminal.

In some embodiments, the server divides the download speeds into a plurality of speed ranges of equal size. For each speed range, the server makes statistics on play data of the terminals (temporarily referred to as a terminal set A here) belonging to the speed range in the first group, and makes statistics on play data of the terminals (temporarily referred to as a terminal set B here) belonging to the speed range in the second group. The play data is, for example, a weighted score calculated from the play amount and the lag rate. For example, play data = play amount ^{∗} a weight value corresponding to the play amount + lag rate ^{∗} a weight value corresponding to the lag rate. The weight value corresponding to the play amount and the weight value corresponding to the lag rate of displaying the content are optionally preset by a technician. The total times (the play amount) of playing the short video is the total times that all terminals in the terminal set A or the terminal set B play the short video within the preset time duration, and the lag rate of displaying the content (the lag rate) is a statistical result of the time duration from the time point when the user clicks the short video option to the time point when the terminal begins to play the short video for each terminal in the terminal set A or the terminal set B. Where the time duration is longer than the preset threshold, a lag is recorded. The server counts the total times of lags occurring in all terminals in the terminal set A or the terminal set B within the preset duration. Then, the total times of lags is divided by the play amount to acquire the lag rate of displaying the content.

The server, after calculating the weighted score based on the play amount and the lag rate in each speed range, may acquire curves showing the relationship between the play data and the download speeds of the terminals in the first group and the terminals of the second group, as shown in FIG. 6. Further, the server optionally determines, in the order from low download speed to high download speed and based on the curves in FIG. 6, the difference value in between the play data of the terminals in the first group and the play data of the terminals in the second group at a same download speed, and finds out the current download speed where the difference value in play data is less than the threshold, i.e., the download speed at point P in FIG. 6. The server takes the download speed at point P as the speed threshold.

The aforesaid two fashions are illustrated by taking the automatic selection by a computer as an example. In some other embodiments, after a curve fitting is performed, the speed threshold is manually selected by a technician based on the curves.

In some embodiments, the server updates the speed threshold based on an update cycle, and each time the update cycle is reached, an updated speed threshold is determined by performing the above processes and then sent to the terminal. The terminal receives the updated speed threshold sent by the server and updates the pre-stored speed threshold based on the updated speed threshold. By taking the updated speed threshold as the second speed threshold as an example, the server sends the second speed threshold to the terminal, and the terminal receives the second speed threshold from the server. The terminal modifies the first speed threshold to the second speed threshold, thereby updating the first speed threshold based on the second speed threshold.

In some embodiments, by preloading content data for the terminal with a lower download speed, the data volume of the preloaded content data can be greatly reduced on the whole, thereby reducing the occupation of transmission resources.

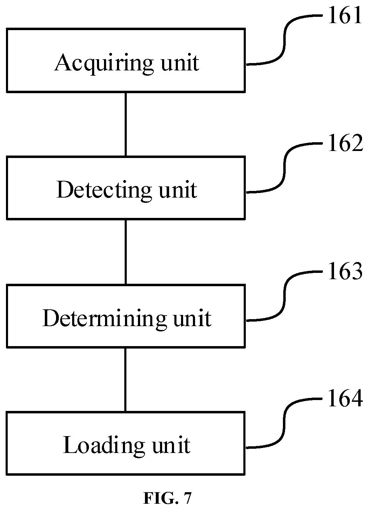

FIG. 7 is a schematic block diagram of an apparatus for preloading content data according to an embodiment of the present disclosure. Referring to FIG. 7, the apparatus includes an acquiring unit 161, a determining unit 163 and a loading unit 164.

The acquiring unit 161 is configured to acquire a download speed.

The determining unit 163 is configured to determine target content data in response to the download speed being less than a first speed threshold, and a trigger event occurring. The trigger event is configured to trigger pre-loading of the target content data, the first speed threshold is determined based on corresponding play data in different speed ranges, and the play data includes at least one of a play amount or a lag rate.

The loading unit 164 is configured to load the target content data.

In some embodiments, as shown in FIG. 7, the apparatus further includes a detecting unit 162 configured to detect the download speed and the trigger event.

In some embodiments, the loading unit 164 is further configured to stop loading the target content data in response to the download speed being greater than the first speed threshold.

In some embodiments, the acquiring unit 161 is further configured to receive the first speed threshold from a server. The first speed threshold is determined based on the corresponding play data of a plurality of terminals in different speed ranges, and the plurality of terminals includes terminals with preloading function enabled and terminals with preloading function disenabled.

In some embodiments, the determining unit 163 is further configured to determine the first speed threshold based on a first curve and a second curve; and determine a difference value threshold based on a difference value between the play data on the first curve corresponding to the first speed threshold and play data on the second curve corresponding to the first speed threshold. The first curve is configured to indicate corresponding play data of terminals with preloading function enabled in different speed ranges, and the second curve is configured to indicate corresponding play data of terminals with preloading function disabled in the different speed ranges.

In some embodiments, the determining unit 163 is configured to: determine a content list including a plurality of pieces of content data; determine content data which has not been preloaded in the content list; and determine the target content data based on the content data which is not preloaded.

In some embodiments, the determining unit 163 is further configured to: receive indication information from a server, and the indication information is configured to indicate the target content data; and determine the target content data based on the indication information.

In some embodiments, the apparatus further includes an updating unit configured to:
receive a second speed threshold from a server; and
update the first speed threshold based on the second speed threshold.

As to the apparatus in the above embodiments, the specific implementations of the operations performed by the respective modules have been described in detail in embodiments of the related method, and are not explained in detail here.

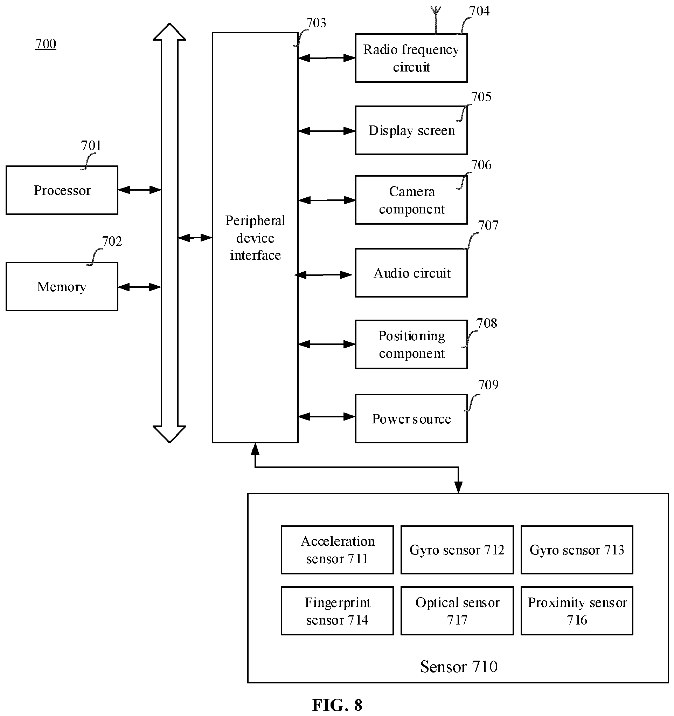

FIG. 8 is a structural block diagram of an electronic device, e.g., a terminal 700, according to an embodiment of the present disclosure. The terminal 700 may be a smart mobile phone, a tablet computer, a moving picture experts group audio layer III (MP3) player, a moving picture experts group audio layer IV (MP4) player, a laptop or a desk computer. The terminal 700 may also be referred to as a user equipment, a portable terminal, a laptop terminal, a desk terminal, etc.

Generally, the terminal 700 includes a processor 701 and a memory 702.

The processor 701 may include one or more processing cores, such as may be a 4-core processor or an 8-core processor. The processor 701 may be implemented by at least one hardware of a digital signal processing (DSP), a field-programmable gate array (FPGA), or a programmable logic array (PLA). The processor 701 may further include a main processor and a coprocessor. The main processor is a processor for processing the data in an awake state, and is further referred to as a central processing unit (CPU). The coprocessor is a low-power-consuming processor for processing the data in a standby state. In some embodiments, the processor 701 may be integrated with a graphics processing unit (GPU), and the GPU is configured to render and draw the content that needs to be displayed by a display screen. In some embodiments, the processor 701 may further include an artificial intelligence (AI) processor configured to process computational operations related to machine learning.

The memory 702 may include one or more computer-readable storage media, and the computer-readable storage medium may be non-transitory. The memory 702 may further include a high-speed random-access memory, and a non-volatile memory, such as one or more disc storage devices and flash storage devices. In some embodiments, the non-transitory computer-readable storage medium in the memory 702 is configured to store at least one instruction. The at least one instruction is configured to be executed by the processor 701 to implement the method for preloading content data according to the method embodiments of the present disclosure.

In some embodiments, the instruction is loaded and executed by the processor to perform:
acquiring a download speed;
determining target content data in response to the download speed being less than a first speed threshold and a trigger event occurring, wherein the trigger event is configured to trigger pre-loading of the target content data, the first speed threshold is determined based on corresponding play data in different speed ranges, and the play data includes at least one of a play amount or a lag rate; and
loading the target content data.

In some embodiments, the processor is configured to perform:
stopping loading the target content data in response to the download speed being greater than the first speed threshold.

In some embodiments, the processor is further configured to perform:
receiving the first speed threshold from a server, wherein the first speed threshold is determined based on corresponding play data of a plurality of terminals in different speed ranges, and the plurality of terminals includes terminals with preloading function enabled and terminals with preloading function disenabled.

In some embodiments, the first speed threshold is determined based on a first curve and a second curve. A difference value between play data on the first curve corresponding to the first speed threshold and play data on the second curve corresponding to the first speed threshold is a difference value threshold. The first curve is configured to indicate corresponding play data of terminals with preloading function enabled in different speed ranges, and the second curve is configured to indicate corresponding play data of terminals with preloading function disabled in the different speed ranges.

In some embodiments, the processor is further configured to perform:
receiving a second speed threshold from a server; and
updating the first speed threshold based on the second speed threshold.

In some embodiments, the processor is further configured to perform:
determining a content list including a plurality of pieces of content data;
determining content data which is not preloaded in the content list; and
determining the target content data based on the content data which is not preloaded.

In some embodiments, the processor is configured to perform:
receiving indication information from the server, wherein the indication information is configured to indicate the target content data; and
determining the target content data based on the indication information.

In some embodiments, the terminal 700 further optionally includes a peripheral device interface 703 and at least one peripheral device. The processor 701, the memory 702, and the peripheral device interface 703 may be connected by a bus or a signal line. The peripheral devices may be connected to the peripheral device interface 703 by the bus, the signal line or the circuit board. Specifically, the peripheral device includes at least one of a radio frequency circuit 704, a touch display screen 705, a camera 706, an audio circuit 707, a positioning component 708 or a power source 709.

The peripheral device interface 703 may be configured to connect at least one peripheral device associated with an input/output (I/O) to the processor 701 and the memory 702. In some embodiments, the processor 701, the memory 702 and the peripheral device interface 703 are integrated on a same chip or circuit board. In some other embodiments, any one or two of the processor 701, the memory 702 and the peripheral device interface 703 may be implemented on a separate chip or circuit board, which is not limited in the embodiments.

The radio frequency circuit 704 is configured to receive and send a radio frequency (RF) signal, which is also referred to as an electromagnetic signal. The radio frequency circuit 704 communicates with a communication network and other communication devices via the electromagnetic signal. The radio frequency circuit 704 converts an electrical signal into the electromagnetic signal to send, or converts the received electromagnetic signal into an electrical signal. Optionally, the radio frequency circuit 704 includes an antenna system, a RF transceiver, one or more amplifiers, a tuner, an oscillator, a digital signal processor, a codec chipset, a subscriber identity module card, and the like. The radio frequency circuit 704 may communicate with other terminals via at least one wireless communication protocol. The wireless communication protocol includes, but is not limited to, a Metropolitan Area Network, various generations of Mobile Communication Networks (2G, 3G, 4G, and 5G), a Wireless Local Area Network and/or a Wireless Fidelity (WiFi) network. In some embodiments, the radio frequency circuit 704 may further include near field communication (NFC) related circuits, which is not limited in the present disclosure.

The display screen 705 is configured to display a user interface (UI). The UI may include a graphics, a text, an icon, a video, and any combination thereof. In the case that the display screen 705 is a touch display screen, the display screen 705 further possesses a capacity to collect touch signals on or over the surface of the display screen 705. The touch signal may be input into the processor 701 as a control signal for processing. In this case, the display screen 705 may further be configured to provide virtual buttons and/or virtual keyboards, which are further referred to as soft buttons and/or soft keyboards. In some embodiments, the display screen 705 may be one and be disposed on the front panel of the terminal 700. In some other embodiments, the display screen 705 may be at least two and be disposed on different surfaces of the terminal 700 or in a folded design. In further embodiments, the display screen 705 may be a flexible display screen and be disposed on the curved or folded surface of the terminal 700. The display screen 705 may even be in an irregular shape other than a rectangle, that is, the display screen 705 may be an irregular-shaped screen. The display screen 705 may be made of a liquid crystal display (LCD), an organic light-emitting diode (OLED) display, or the like.

The camera component 706 is configured to capture images or videos. Optionally, the camera component 706 includes a front camera and a rear camera. Generally, the front camera is disposed on the front panel of the terminal, and the rear camera is disposed on the back of the terminal. In some embodiments, there may be at least two rear cameras that are any one of a main camera, a depth-of-field camera, a wide-angle camera, and a telephoto camera, so as to realize a background blurring function achieved by fusion of the main camera and the depth-of-field camera, a panoramic shooting function and a virtual reality (VR) shooting function or other fusion shooting functions achieved by fusion of the main camera and the wide-angle camera. In some embodiments, the camera component 706 may further include a flashlight. The flashlight may be a mono-color temperature flashlight or a two-color temperature flashlight. The two-color temperature flash is a combination of a warm flashlight and a cold flashlight, and may be used for light compensation at different color temperatures.

The audio circuit 707 may include a microphone and a speaker. The microphone is configured to collect sound waves of users and environments, and convert the sound waves into electrical signals for inputting into the processor 701 for processing, or inputting into the radio frequency circuit 704 for voice communication. For the purpose of stereo acquisition or noise reduction, there may be multiple microphone that are disposed at different locations of the terminal 700. The microphone may further be an array microphone or an omnidirectional acquisition microphone. The speaker is then configured to convert the electrical signals from the processor 701 or the radio frequency circuit 704 into the sound wave. The speaker may be a conventional thin film speaker or a piezoelectric ceramic speaker. Where the speaker is the piezoelectric ceramic speaker, the electrical signals may be not only converted into human-audible sound waves, but also converted into the sound waves inaudible to humans for ranging or other functions. In some embodiments, the audio circuit 707 may further include a headphone jack.

The positioning component 708 is configured to position the current geographic location of the terminal 700 to implement navigation or location based service (LBS). The positioning component 708 may be a positioning component based on the United States global positioning system (GPS), the Chinese Beidou system, the Russian GRONASS system or the European Union Galileo system.

The power source 709 is configured to power up the components in the terminal 700. The power source 709 may be alternating current, direct current, a disposable battery, or a rechargeable battery. Where the power source 709 includes the rechargeable battery, the rechargeable battery may support wired charging or wireless charging. The rechargeable battery may further support the fast charging technology.

In some embodiments, the terminal 700 further includes one or more sensors 710. The one or more sensors 710 include, but are not limited to, an acceleration sensor 711, a gyro sensor 712, a pressure sensor 713, a fingerprint sensor 714, an optical sensor 715 and a proximity sensor 716.

The acceleration sensor 711 may detect magnitudes of accelerations on three coordinate axes of a coordinate system established for the terminal 700. For example, the acceleration sensor 711 may be configured to detect components of a gravitational acceleration on the three coordinate axes. The processor 701 may control the touch display screen 705 to display a user interface in a landscape view or a portrait view based on a gravity acceleration signal collected by the acceleration sensor 711. The acceleration sensor 711 may further be configured to collect motion data of a game or a user.

The gyro sensor 712 may detect an orientation and a rotation angle of the terminal 700, and may cooperate with the acceleration sensor 711 to collect a 3D motion of the user on the terminal 700. Based on the data collected by the gyro sensor 712, the processor 701 may implement the following functions: motion sensing (such as changing the UI according to a tilt operation of the user), image stability in shooting, game control and inertial navigation.

The pressure sensor 713 may be disposed on a side frame of the terminal 700 and/or a substratum of the touch display screen 705. In the case that the pressure sensor 713 is disposed on the side frame of the terminal 700, a holding signal of the user on the terminal 700 may be detected. The processor 701 may perform a left-right hand recognition or a quick operation based on the holding signal collected by the pressure sensor 713. In the case that the pressure sensor 713 is disposed on the substratum of the touch display screen 705, the processor 701 controls an operable control on the UI based on a pressure operation of the user on the touch display screen 705. The operable control includes at least one of a button control, a scroll bar control, an icon control or a menu control.

The fingerprint sensor 714 is configured to collect a fingerprint of the user. The processor 701 identifies the identity of the user based on the fingerprint collected by the fingerprint sensor 714, or the fingerprint sensor 714 identifies the identity of the user based on the collected fingerprint. In the case that the identity of the user is identified as a trusted identity, the processor 701 authorizes the user to perform related sensitive operations, such as unlocking the screen, viewing encrypted information, downloading software, paying, and changing settings. The fingerprint sensor 714 may be provided on the front, back, or side of the terminal 700. In the case that the terminal 700 is provided with a physical button or a Logo of a manufacturer, the fingerprint sensor 714 may be integrated with the physical button or the Logo of a manufacturer.

The optical sensor 715 is configured to collect an ambient light intensity. In one embodiment, the processor 701 may control the display brightness of the touch display screen 705 based on the intensity of the ambient light collected by the optical sensor 715. Specifically, in the case that the intensity of the ambient light is high, the display brightness of the touch display screen 705 is increased; and in the case that the intensity of the ambient light is low, the display brightness of the touch display screen 705 is decreased. In another embodiment, the processor 701 may further dynamically adjust shooting parameters of the camera component 706 based on the intensity of the ambient light collected by the optical sensor 715.

The proximity sensor 716, also referred to as a distance sensor, is generally disposed on the front panel of the terminal 700. The proximity sensor 716 is configured to capture a distance between the user and a front surface of the terminal 700. In one embodiment, in the case that the proximity sensor 716 detects that the distance between the user and the front surface of the terminal 700 gradually decreases, the processor 701 controls the touch display screen 705 to switch from a screen-on state to a screen-off state. In the case that the proximity sensor 716 detects that the distance between the user and the front surface of the terminal 700 gradually increases, the processor 701 controls the touch display screen 705 to switch from the screen-off state to the screen-on state.

It is understood by those skilled in the art that the structure shown in FIG. 8 does not constitute a limitation to the terminal 700, and may include more or less components than shown, or may combine some components or adopt different component arrangements.

In some exemplary embodiments, a computer-readable storage medium is further provided, such as a memory including instructions. The instructions may be executed by a processor in a terminal to perform the method for preloading content data according to the above embodiments. For example, the computer-readable storage medium may be a read-only memory (ROM), a random access memory (RAM), a compact disc ROM (CD-ROM), a magnetic tape, a floppy disc, an optical data storage device, and the like.

In some embodiments, the storage medium stores at least one instruction, and the at least one instruction is loaded and executed by a processor to perform:
acquiring a download speed;
determining target content data in response to the download speed being less than a first speed threshold and a trigger event occurring, wherein the trigger event is configured to trigger pre-loading of the target content data, the first speed threshold is determined based on corresponding play data in different speed ranges, and the play data includes at least one of a play amount or a lag rate; and
loading the target content data.

In some embodiments, when the instructions stored in the storage medium are executed by a processor of an electronic device, the instructions cause the electronic device to further perform:
stopping loading the target content data in response to the download speed being greater than the first speed threshold.

In some embodiments, when the instructions stored in the storage medium are executed by the processor of the electronic device, the instructions cause the electronic device to further perform:

receiving the first speed threshold from a server, wherein the first speed threshold is determined based on corresponding play data of a plurality of terminals in different speed ranges, and the plurality of terminals include terminals with preloading function enabled and terminals with preloading function disabled.

In some embodiments, the processor is further configured to perform: determining the first speed threshold based on a first curve and a second curve; and determining a difference value threshold based on a difference value between play data on the first curve corresponding to the first speed threshold and play data on the second curve corresponding to the first speed threshold, wherein the first curve is configured to indicate corresponding play data of terminals with preloading function enabled in different speed ranges, and the second curve is configured to indicate corresponding play data of terminals with preloading function disabled in the different speed ranges.

In some embodiments, when the instructions stored in the storage medium are executed by the processor of the electronic device, the instructions cause the electronic device to further perform:
receiving a second speed threshold from a server; and
updating the first speed threshold based on the second speed threshold.

In some embodiments, when the instructions stored in the storage medium are executed by the processor of the electronic device, the instructions cause the electronic device to further perform:
determining a content list including a plurality of pieces of content data;
determining content data which has not been preloaded in the content list; and
determining the target content data based on the content data which has not been preloaded.

In some embodiments, when the instructions stored in the storage medium are executed by the processor of the electronic device, the instructions cause the electronic device to further perform:
receiving indication information from a server, wherein the indication information is configured to indicate the target content data; and
determining the target content data based on the indication information.

In some embodiments, a computer program product is provided. The computer program product stores at least one instruction which, when being executed by a processor, cause the processor to perform:
acquiring a download speed;
determining target content data in response to the download speed being less than a first speed threshold and a trigger event occurring, wherein the trigger event is configured to trigger pre-loading of the target content data, the first speed threshold is determined based on corresponding play data in different speed ranges, and the play data includes at least one of a play amount or a lag rate; and
loading the target content data.

In some embodiments, when the instructions stored in the storage medium are executed by a processor of an electronic device, the instructions cause the electronic device to further perform:
stopping loading the target content data in response to the download speed being greater than the first speed threshold.

In some embodiments, when the instructions stored in the storage medium are executed by the processor of the electronic device, the instructions cause the electronic device to further perform:
receiving the first speed threshold from a server, wherein the first speed threshold is determined based on corresponding play data of a plurality of terminals in different speed ranges, and the plurality of terminals includes terminals with preloading function enabled and terminals with preloading function disabled.

In some embodiments, when the instructions stored in the storage medium are executed by the processor of the electronic device, the instructions cause the electronic device to further perform:
determining the first speed threshold based on a first curve and a second curve; and determining a difference value threshold based on a difference value between play data on the first curve corresponding to the first speed threshold and play data on the second curve corresponding to the first speed threshold, wherein the first curve is configured to indicate corresponding play data of terminals with preloading function enabled in different speed ranges, and the second curve is configured to indicate corresponding play data of terminals with preloading function disabled in the different speed ranges.

In some embodiments, when the instructions stored in the storage medium are executed by the processor of the electronic device, the instructions cause the electronic device to further perform:
receiving a second speed threshold from a server; and
updating the first speed threshold based on the second speed threshold.

In some embodiments, when the instructions stored in the storage medium are executed by the processor of the electronic device, the instructions cause the electronic device to further perform:
determining a content list including a plurality of pieces of content data;
determining content data which is not preloaded in the content list; and
determining the target content data based on the content data which is not preloaded.

In some embodiments, when the instructions stored in the storage medium are executed by the processor of the electronic device, the instructions cause the electronic device to further perform:
receiving indication information from a server, and the indication information is configured to indicate the target content data; and
determining the target content data based on the indication information.

It can be understood by those of ordinary skill in the art that all or part of the steps in the above embodiments may be implemented by hardware, or by a program to instruct related hardware. The program may be stored in a computer-readable storage medium. The above storage medium may be a read-only memory, a magnetic disk, an optical disk, or the like.

It should be understood that the present disclosure is not limited to the exact structures that have been described above and shown in the accompanying drawings, and various modifications and changes may be made without departing from the scope thereof. The scope of the present disclosure is only subject to the appended claims.

## Claims

1. A method for preloading content data, comprising:
acquiring a download speed;
determining target content data in response to the download speed being less than a first speed threshold and a trigger event occurring, wherein the trigger event is configured to trigger pre-loading of the target content data, and the first speed threshold is determined based on corresponding play data in different speed ranges, the play data comprising at least one of a play amount or a lag rate; and
loading the target content data.

2. The method according to claim 1, further comprising:
stopping loading the target content data in response to the download speed being greater than the first speed threshold.

3. The method according to claim 1, wherein prior to acquiring the download speed, the method further comprises:
receiving the first speed threshold from a server, wherein the first speed threshold is determined based on corresponding play data of a plurality of terminals in different speed ranges, the plurality of terminals comprising terminals with preloading function enabled and terminals with preloading function disabled.

4. The method according to claim 3, further comprising:
determining the first speed threshold based on a first curve and a second curve, and
determining a difference value threshold based on a difference value between play data on the first curve corresponding to the first speed threshold and play data on the second curve corresponding to the first speed threshold,
wherein the first curve is configured to indicate corresponding play data of terminals with preloading function enabled in different speed ranges, and the second curve is configured to indicate corresponding play data of terminals with preloading function disabled in the different speed ranges.

5. The method according to any of claims 1 to 4, wherein after loading the target content data, the method further comprises:
receiving a second speed threshold from the server; and
updating the first speed threshold based on the second speed threshold.

6. The method according to claim 1, wherein determining the target content data comprises:
determining a content list comprising a plurality of pieces of content data;
determining content data which has not been preloaded in the content list; and
determining the target content data based on the content data which has not been preloaded.

7. The method according to claim 1, wherein determining the target content data comprises:
receiving indication information from a server, wherein the indication information is configured to indicate the target content data; and
determining the target content data based on the indication information.

8. An electronic device, comprising:
a processor; and
a memory for storing instructions executable by the processor,
wherein the processor is configured to execute the instructions to perform:
acquiring a download speed;
determining target content data in response to the download speed being less than a first speed threshold and a trigger event occurring, wherein the trigger event is configured to trigger pre-loading of the target content data, the first speed threshold is determined based on corresponding play data in different speed ranges, and the play data comprises at least one of a play amount or a lag rate; and
loading the target content data.

9. The electronic device according to claim 8, wherein the processor is configured to perform:
stopping loading the target content data in response to the download speed being greater than the first speed threshold.

10. The electronic device according to claim 8, wherein the processor is further configured to perform:
receiving the first speed threshold from a server, wherein the first speed threshold is determined based on corresponding play data of a plurality of terminals in different speed ranges, the plurality of terminals comprising terminals with preloading function enabled and terminals with preloading function disenabled.

11. The electronic device according to claim 10, wherein the processor is further configured to perform:
determining the first speed threshold based on a first curve and a second curve; and
determining a difference value threshold based on a difference value between play data on the first curve corresponding to the first speed threshold and play data on the second curve corresponding to the first speed threshold,
wherein the first curve is configured to indicate corresponding play data of terminals with preloading function enabled in different speed ranges, and the second curve is configured to indicate corresponding play data of terminals with preloading function disabled in the different speed ranges.

12. The electronic device according to any of claims 8 to 11, wherein the processor is further configured to perform:
receiving a second speed threshold from the server; and
updating the first speed threshold based on the second speed threshold.

13. The electronic device according to claim 8, wherein the processor is further configured to perform:
determining a content list comprising a plurality of pieces of content data;
determining content data which has not been preloaded in the content list; and
determining the target content data based on the content data which has not been preloaded.

14. The electronic device according to claim 8, wherein the processor is configured to perform:
receiving indication information from a server, wherein the indication information is configured to indicate the target content data; and
determining the target content data based on the indication information.

15. A storage medium, wherein when instructions stored in the storage medium are executed by a processor of an electronic device, the instructions cause the electronic device to be capable of performing:
acquiring a download speed;
determining target content data in response to the download speed being less than a first speed threshold and a trigger event occurring, wherein the trigger event is configured to trigger pre-loading of the target content data, and the first speed threshold is determined based on corresponding play data in different speed ranges, the play data comprising at least one of a play amount or a lag rate; and
loading the target content data.

16. The storage medium according to claim 15, wherein when the instructions stored in the storage medium are executed by the processor of the electronic device, the instructions cause the electronic device to be capable of further performing:
stopping loading the target content data in response to the download speed being greater than the first speed threshold.

17. The storage medium according to claim 15, wherein when the instructions stored in the storage medium are executed by the processor of the electronic device, the instructions cause the electronic device to be capable of further performing:
receiving the first speed threshold from a server, wherein the first speed threshold is determined based on corresponding play data of a plurality of terminals in different speed ranges, the plurality of terminals comprising terminals with preloading function enabled and terminals with preloading function disabled.

18. The storage medium according to claim 17, wherein when the instructions stored in the storage medium are executed by the processor of the electronic device, the instructions cause the electronic device to be capable of further performing:
determining the first speed threshold based on a first curve and a second curve; and
determining a difference value threshold based on a difference value between play data on the first curve corresponding to the first speed threshold and play data on the second curve corresponding to the first speed threshold,
wherein the first curve is configured to indicate corresponding play data of terminals with preloading function enabled in different speed ranges, and the second curve is configured to indicate corresponding play data of terminals with preloading function disabled in the different speed ranges.

19. The storage medium according to any of claims 15 to 18, wherein when the instructions stored in the storage medium are executed by the processor of the electronic device, the instructions cause the electronic device to be capable of further performing:
receiving a second speed threshold from the server; and
updating the first speed threshold based on the second speed threshold.

20. The storage medium according to claim 15, wherein when the instructions stored in the storage medium are executed by the processor of the electronic device, the instructions cause the electronic device to be capable of further performing:
determining a content list comprising a plurality of pieces of content data;
determining content data which has not been preloaded in the content list; and
determining the target content data based on the content data which has not been preloaded.

21. The storage medium according to claim 15, wherein when the instructions stored in the storage medium are executed by the processor of the electronic device, the instructions cause the electronic device to be capable of further performing:
receiving indication information from a server, wherein the indication information is configured to indicate the target content data; and
determining the target content data based on the indication information.
